# EUROPEAN PATENT APPLICATION

(11) **EP 0 911 500 A2**
(43) Date of publication of application: **28.04.1999**
(21) Application number: 98119810.4
(22) Date of filing: 19.10.1998
(51) Int. Cl.: F02B 23/06

(54) **Direct injection diesel engine**

(30) Priority: 20.10.1997 JP 286951/97; 24.07.1998 JP 209269/98
(71) Applicant: NISSAN MOTOR COMPANY, LIMITED, Yokohama-shi, Kanagawa 221-0023 (JP)
(72) Inventor: Tsutsumoto, Naoya, Yokohama-shi, Kanagawa 224-0064 (JP)
(74) Representative: Grünecker, Kinkeldey, Stockmair & Schwanhäusser Anwaltssozietät

(57) **Abstract**

A direct injection diesel engine comprises a cylinder block having a cylinder, a piston with a cavity in a piston crown, a cylinder head on the cylinder block and having a combustion-chamber ceiling wall cooperating with the piston crown and the cavity to define a combustion chamber, and a fuel injector nozzle attached to the ceiling wall of the cylinder head for injecting fuel toward the cavity. The ratio of the maximum inside diameter of the cavity to the bore of the cylinder is et to be below 0.6 to enhance squish action. The border between the cavity and the piston crown is formed as a sharpened lip portion in cross section to impart strong turbulence to both squish air-flow and counter-squish air-flow.

## Description

### BACKGROUND OF THE INVENTION

### Field of the Invention

The present invention relates to an in-cylinder direct injection diesel engine employing a fuel-injection system that injects fuel directly into the combustion chamber, and specifically concerned with the improvements in the form or shape of a combustion chamber for a direct injection diesel engine.

### Description of the Prior Art

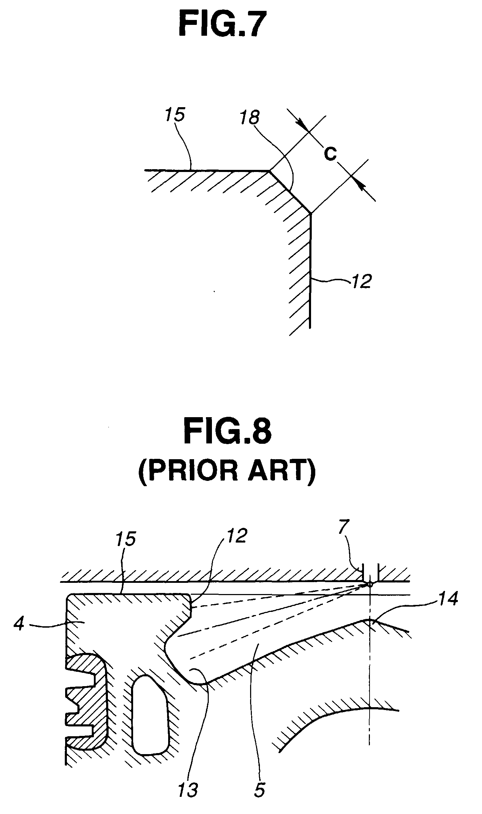

In recent years, there have been proposed and developed various forms or shapes of combustion chamber for use in diesel engines, because of rapidly increasing demand for reduced air pollutants and enhanced engine power output in diesel engines. As an example of a typical form of combustion chamber suitable for direct injection diesel engines, Fig. 8 shows a so-called open combustion chamber for direct injection diesel engines as disclosed in Japanese Patent Provisional Publication No. 8-93550. As seen in Fig. 8, a piston 4 for use in diesel engines is formed with a re-entrant cavity 5 in the piston crown or head 15. The piston 4 shown in Fig. 8 is generally termed as an "open combustion chamber type piston". The piston bowl cavity 5 of the open combustion chamber type piston 4 is defined by an essentially cylindrical inlet portion (simply a cylindrical entrance) 12 which opens upwards at the top surface 15 of the piston, a reentrant portion 13 further recessed from the cylindrical entrance 12, and a central raised portion 14 slightly raised upwards from the bottom of the reentrant portion 13 of the open combustion chamber. The injector nozzle 7 is located so that the center axis of the nozzle is coaxial with the center axis of the associated engine cylinder, and that the tip of the nozzle 7 is directed to the centre of the cavity 5 of the open combustion chamber. Generally, the nozzle 7 has a plurality of fine spray holes in its tip. The fuel is injected or directed into the reentrant portion 13 of the cavity 5 radially via the spraying holes. In the construction of the conventional open combustion chamber shown in Fig. 8, the inside diameter of the cylindrical entrance 12 of the cavity 5 is comparatively great owing to several factors for example location of a glow plug, thus ineffectively reducing the squish area. Owing to the comparatively great inside diameter of the entrance 12 (or owing to the reduced squish area), it is difficult to strongly satisfactorily increase the squish action to the air trapped between the piston crown 15 and the combustion-chamber ceiling wall (the flattened bottom face of the cylinder head). That is, it is difficult to generate strong squish gas-flow entering into the cavity 5. As is generally known, the edged portion of the cylindrical entrance 12 of the cavity 5 acts as a flow resistance against squish air-flow squirted out of a decreasing space between the piston crown and the cylinder head and pushed into the cavity 5 by virtue of the squish action when the piston 4 reaches a position nearer the top dead center (TDC) on the compression stroke, and also acts as a flow resistance against counter-squish air-flow flowing out of the cavity 5 when the piston 4 commences to move down from the top dead center. The greatly-increased turbulent flow improves mixture formation and thus promotes stable combustion. In the conventional combustion chamber suitable for direct-injection diesel engines, the edged portion of the cylindrical entrance 12 is often formed as a rounded portion (in cross-section). The roundness or the radius of curvature of the rounded portion of the cylindrical entrance is relatively great. Due to such a relatively great rounded portion of the cylindrical entrance, there is a tendency of undesiredly reduced flow resistance against both the squish air-flow and the counter-squish air-flow. This decreases a turbulence-generating effect. As appreciated, there is a limit in enhancing the air utilization factor of the air present in the combustion chamber only by the squish gas-flow and turbulent gas-flow occurring with the re-entrant bowl cavity 5 and the edged entrance 12.

### SUMMARY OF THE INVENTION

Accordingly, it is an object of the invention to provide a direct injection diesel engine which avoids the aforementioned disadvantages of the prior art.

It is another object of the invention to provide an improved combustion-chamber structure suitable for a direct injection diesel engine with a so-called open combustion chamber type piston, capable of enhancing the air utilization factor by strong squish action, obtained by optimizing the form and dimensions of a reentrant bowl cavity, and by enhanced turbulence, imparted to both squish air-flow and counter-squish air-flow and obtained by optimization in the roundness or chamfer dimensions of a lip portion of the cylindrical entrance.

In order to accomplish the aforementioned and other objects of the present invention, a direct injection diesel engine comprises a direct injection diesel engine comprises a cylinder block having a cylinder, a piston movable through a stroke in the cylinder and having a cavity in a piston crown, a cylinder head on the cylinder block and having a combustion-chamber ceiling wall, the ceiling wall cooperating with the piston crown and the cavity to define a combustion chamber, and a fuel injector nozzle attached to the combustion-chamber ceiling wall for injecting fuel toward the cavity, characterized in that a ratio of the maximum inside diameter of the cavity to the bore of the cylinder is set to be below 0.6, and that the border between the cavity and the piston crown is formed as a sharpened lip portion in cross section. It is preferable that the direct injection diesel engine may further comprise a glow plug fitted to the combustion-chamber ceiling wall for pre-heating air present in the combustion chamber. Preferably, the entrance of the cavity has a notched portion partly formed at the sharpened lip portion to avoid interference between the glow plug and the edge of the entrance.

It is more preferable that the ratio of the maximum inside diameter D_{C} of the cavity to the bore B of the cylinder is set within a predetermined range of 0.5 ≦ D_{C}/B ≦ 0.6. Preferably, the cavity may comprise at least a cylindrical entrance opening along the inner periphery of a rimmed portion of the piston crown, and a reentrant portion further recessed from the cylindrical entrance, and also a ratio D_{L}/D_{C} of the minimum inside diameter D_{L} of the cylindrical entrance to the maximum inside diameter D_{C} of the cavity is set within a predetermined range of 0.8 ≦ D_{L}/D_{C} ≦ 0.9. More preferably, the cavity may comprise a cylindrical entrance opening along the inner periphery of a rimmed portion of the piston crown, a reentrant portion further recessed from the cylindrical entrance, and a central raised portion raised from the bottom of the reentrant portion, and also a ratio h/H of the minimum depth h of the central raised portion to the maximum depth H of the cavity is set substantially within a predetermined range of 0.3 ≦ h/H ≦ 0.4. To provide a properly-edged entrance of the cavity, the cross section of the sharpened lip portion may be formed as a rounded portion having a radius-of-curvature of substantially 0.2 mm. Alternatively, the cross section of the sharpened lip portion may be formed as a chamfered portion having a chamfer dimension of substantially 0.2 mm.

### BRIEF DESCRIPTION OF THE DRAWINGS

Fig. 1 is a partial cross section of the essential part of a first embodiment of a direct injection diesel engine having open combustion chamber type pistons.
Fig. 2 is a plan view illustrating the piston crown of the open combustion chamber type piston used in the direct injection diesel engine of the first embodiment.
Fig. 3 is a partial cross section of the lip portion of the edged cylindrical entrance of the reentrant cavity of the open combustion chamber type piston of the first embodiment.
Fig. 4 is a partial cross-sectional view of the direct injection diesel engine of the first embodiment, illustrating part of the cylinder head and part of the cylinder block.
Fig. 5 is a graph illustrating engine speed versus engine output torque characteristics, and used to compare the present invention with the prior art.
Fig. 6 is a graph illustrating the relationship among the engine speed, the engine output torque, and the excess air factor (λ), comparing the present invention to the first, second, and third prior arts I, II, III.
Fig. 7 is a partial cross section illustrating another embodiment of the lip portion of the edged cylindrical entrance.
Fig. 8 is a partial cross-sectional view of a conventional direct injection diesel engine having an open combustion chamber type piston and a fuel injector nozzle.

### DESCRIPTION OF THE PREFERRED EMBODIMENTS

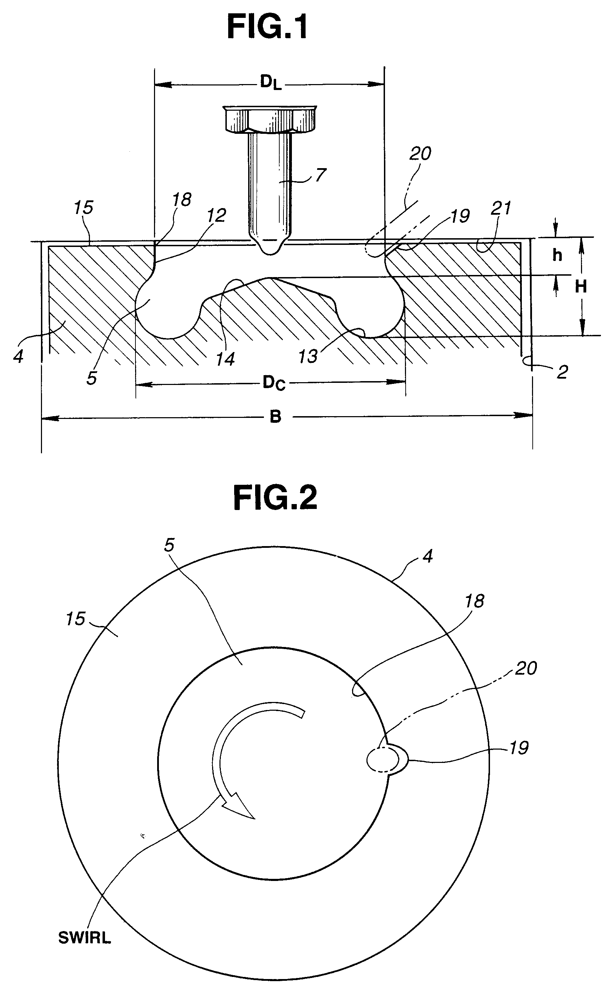

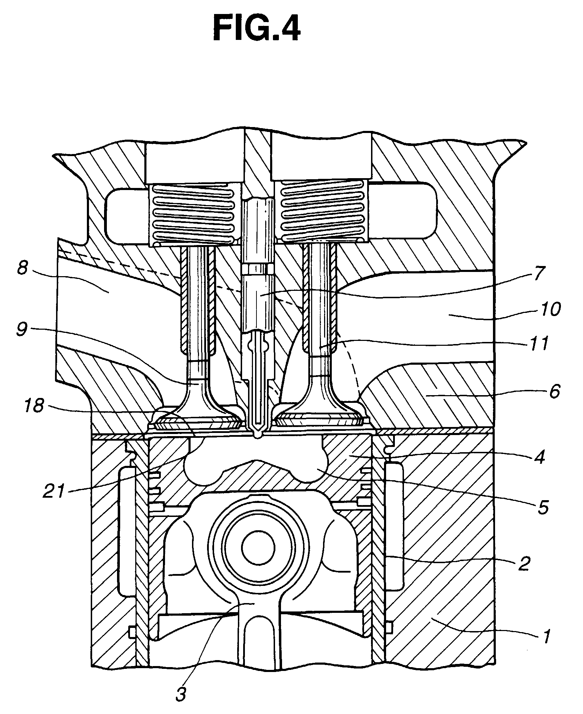

Referring now to the drawings, particularly to Figs. 1 through 4, there is shown the essential part of the direct injection diesel engine of the first embodiment. In Fig. 4, reference sign 1 denotes a cylinder block which is a basic framework of the engine. Reference sign 2 denotes an engine cylinder. In the shown embodiment, the engine cylinder 2 consists of a wet liner type cylinder in which the cylinder liner is directly fitted into the cooling water passages to provide the best cooling effect. Reference sign 6 denotes a cylinder head fitted onto the cylinder block 1 through a gasket in an air-tight fashion. Reference sign 4 denotes a piston with a reentrant cavity 5 that provides a so-called open combustion chamber. The piston 4 is movable through a stroke in the cylinder 2. The cavity 5 is incorporated in the crown 15 of the piston 4. The upper portion of the piston 4 is somewhat similar to a Mexican hat. Intake and exhaust ports 8 and 10 are arranged in the cylinder head 6. An intake valve 9 is located in the cylinder head 6 to open and close the intake port 8, whereas an exhaust valve 11 is carried in the cylinder head 6 to open and close the exhaust port 10. As clearly seen in Fig. 4, the cylinder head 6 has a combustion-chamber ceiling wall 21 cooperating with the crown portion 15 of the Mexican hat shaped piston 4 and the piston bowl cavity 5 to define a combustion chamber. A fuel injector nozzle 7 is attached to the ceiling wall 21 to inject or spray out the diesel fuel oil radially into the combustion chamber. As may be appreciated from the cross-section of Fig. 4, the direct injection diesel engine of the embodiment is exemplified in a four-valve DOHC direct-injection, four-stroke-cycle diesel engine. Actually, two intake valves (9, 9) and two exhaust valves (11, 11) are carried in the ceiling wall 21 of the cylinder head 6, in such a manner as to surround the injector nozzle 7. During the intake stroke, as the piston 4 starts its downward movement and the two intake valves 9 open, a vacuum is created in the cylinder 2. Thus, the air is sucked or drawn into the engine cylinder through the intake-valve ports 8 past the respective intake valves (9, 9), because of pressure differential. After the piston 4 reaches bottom dead center (BDC), the piston starts its upward movement. As this happens, the intake valves (9, 9) close, and the exhaust valves (11, 11) are also closed to seal the cylinder 2. As the piston 4 moves upward, the air alone is compressed. At the end of the compression stroke where the piston 4 reaches a predetermined position nearer the top dead center (TDC), the fuel injector opens to inject or spray the diesel fuel oil via the nozzle 7 into the combustion chamber. Heat produced by compressing the air introduced into the cylinder 2 ignites the fuel oil. On the power stroke, the fuel oil burns and creates high pressure, and thus the piston 4 is pushed down. At the end of the power stroke, the exhaust valves (11, 11) open to allow the burned gases to escape or exhaust from the cylinder into the respective exhaust ports 10 during the exhaust stroke. During operation of the engine, these four piston strokes are repeated. The reciprocating motion of the piston 4 is converted into rotary motion of an engine crankshaft (not shown) by means of a connecting rod 3 which connects the piston 4 and a crankpin of a crank on the engine crankshaft.

Hereunder described is the detailed construction of the upper portion of the piston 4. As best shown in Figs. 1 and 2, the piston 4 for use in the direct injection diesel engine is formed with a reentrant cavity 5 in the crown 15 thereof. That is, the piston 4 is of a so-called "open combustion chamber type". The fuel injector nozzle 7 is located so that the center axis of the nozzle is coaxial with the center axis of the engine cylinder 2. The tip of the nozzle 7 is directed to the centre of the cavity 5 of the open combustion chamber. That is, the fuel injector is centrally located over the piston 4 and the cylinder 2. The piston crown or head 15 is formed on the plane normal to the center axis of the cylinder 2. The combustion-chamber ceiling wall 21 is also formed on the plane normal to the center axis of the cylinder 2. The piston crown 15 has a rimmed portion circumferentially extending annularly round the cavity 5. The rimmed portion has a substantially annular flattened top surface. A squish area is defined between the rimmed portion of the piston crown 15 and the combustion-chamber ceiling wall 21 of the cylinder head 6, when the piston 4 is at top dead center (TDC). At the end of the compression stroke, the rimmed portion of the piston crown 15 squishes or squeezes the air trapped between the rimmed portion of the piston crown 15 and the ceiling wall 21 of the cylinder head, so as to produce the squish air-flow entering into the cavity 5. The piston bowl cavity 5 induces or generates swirl flow (rotating circumferentially along the inner periphery of the cylinder 2) in the intake air entering through the intake ports (8, 8) into the cylinder 2. The reentrant-bowl cavity 5 of the open combustion chamber type piston 4 is comprised of an essentially cylindrical upwardly opening inlet portion (simply a cylindrical entrance) 12 formed along the inner periphery of the rimmed portion of the piston crown 15, a reentrant portion 13 further recessed from the cylindrical entrance 12, and a central raised portion 14 slightly raised upwardly from the bottom of the reentrant portion 13 of the open combustion chamber. As seen in Fig. 1, the cylindrical entrance 12 constructs the upper portion of the side wall of the cavity 5 opening upwardly at the top of the piston. As can be appreciated from the cross section of Fig. 1, the cylindrical entrance 12 is arranged to be perpendicular to the crown 15 of the piston 4. The rimmed portion of the piston crown 15 and the cylindrical entrance 12 cooperates with each other to define an edged entrance portion 18 (or a lip portion), which will be fully described later. The circumferentially-extending edged entrance portion 18 corresponds to the border between the reentrant cavity 5 and the piston crown 15. The reentrant portion 13 constructs the lower portion of the side wall of the cavity 5 and the outer peripheral portion of the bottom wall surface of the cavity 5. The reentrant portion 13 is formed or curved into a substantially elliptic shape in radial cross section. The reentrant portion 13 is doughnut-shaped and extends annularly coaxially with respect to the center axis of the piston 4. The central raised portion 14 constructs the central portion of the bottom of the cavity 5. The central raised portion 14 is concentric with the piston 4 and formed or raised into a circular cone whose vertical angle is an obtuse angle. Although it is not clearly shown, the injector nozzle 7 comprises a substantially cylindrical hollow nozzle body, and a pintle valve or a needle valve which is axially slidably accommodated in the nozzle body. To provide the fuel injecting operation, the needle valve is lifted or raised away from its valve seat formed in the nozzle body. The lift of the needle valve of the fuel injector is dependent on a pressure level of fuel pressure of the pressurized diesel fuel oil, fed from a fuel pump (not shown) via a fuel passage (not shown) to the fuel injector in synchronization with engine revolution speeds. As long as the needle valve is lifted, fuel sprays out with the nozzle opened. Conversely, when a return spring (not shown) pushes the needle valve back down onto its seat and thus the tip end of the needle valve is seated just on the seat, the nozzle 7 closes. This stops the fuel spray. In the shown embodiment, the fuel injector nozzle 7 is comprised of a typical multi-hole type injector nozzle. The multi-hole type injector nozzle 7 has a plurality of tiny spray holes each of which produces a substantially conical fuel spray under fuel pressure. Usually, the spray holes are formed by boring or drilling in the tip of the nozzle 7. The fuel is injected or sprayed out radially toward the cavity 5 with the needle valve moved away from the needle-valve seat. A glow plug 20 is fitted to the combustion-chamber ceiling wall 21 of the diesel-engine cylinder 2 for pre-heating the air present in the combustion chamber. The glow plug 20 is provided to initiate or aid combustion by pre-heating the fuel spray injected from the injector nozzle 7 and the air within the combustion chamber during engine start-up period, such as during cold engine start.

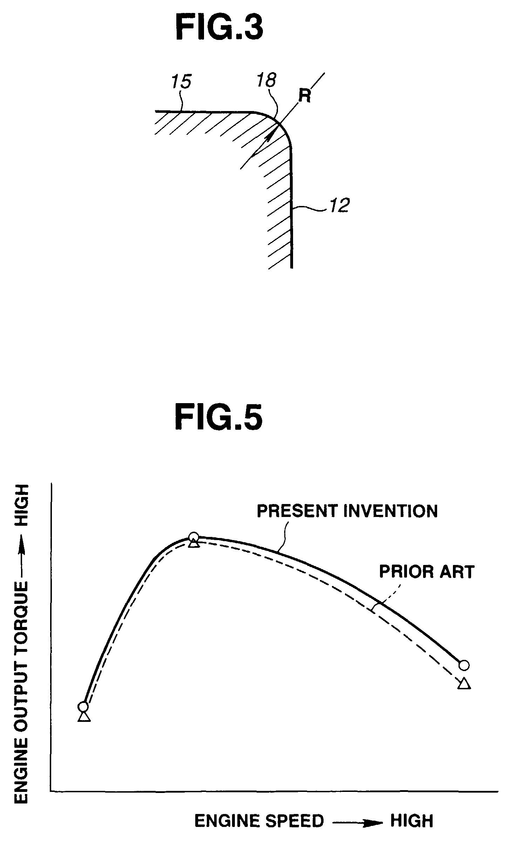

As described hereunder, the open combustion chamber type piston employed in the direct injection diesel engine according to the present invention, is mainly characterized by the optimized form and dimensions of the cavity 5 and the hard-edged or sharp-edged lip portion 18 bordered between the piston crown 15 and the cylindrical entrance 12. As previously discussed, the cylindrical entrance 12 is perpendicular to the rimmed portion of the piston crown 15 in cross section to form the lip portion 18. As appreciated from the cross section of Fig. 1, the lip portion 18 is properly sharp-edged or sharpened so as to produce turbulent flow of air entering into the cavity 5 or air flowing out of the cavity. That is, the sharpened lip portion 18 of the cylindrical entrance 12 acts as a flow resistance against squish air-flow squirted out of a decreasing space between the piston crown 15 and the cylinder head 6 and pushed into the cavity 5 by virtue of the squish action when the piston 4 reaches a position nearer the top dead center (TDC) on the compression stroke, and also acts as a flow resistance against counter-squish air-flow flowing out of the cavity 5 when the piston 4 commences to move down from the top dead center to bottom dead center. As discussed, the properly sharpened lip portion 18 of the cylindrical entrance 12 serves to impart turbulence to both squish air-flow and counter-squish air-flow. That is, the properly sharpened lip portion 18 functions as a strong turbulent-flow generating means. Note that, for the purpose of producing strong turbulent flow, the sharpened lip portion 18 of the cylindrical entrance 12 of the open combustion chamber type piston 4 of the first embodiment is more sharp-edged or sharpened than in a conventional open combustion chamber type piston with an edged entrance and a reentrant bowl cavity. In the first embodiment, as seen in Fig. 3, the properly sharpened lip portion 18 of the entrance 12 is formed or machined as a rounded portion (in cross section) having a specified very small roundness, in such a manner as to balance two contradictory requirements, that is, optimal sharpening and reduction in thermal stress. Actually, the radius-of-curvature or roundness R of the sharpened lip portion 18 of the entrance 12 is set at the smallest possible value obtainable by usual machining, such as approximately 0.2 mm. As shown in Figs. 1 and 2, the circumferentially-extending properly-sharpened lip portion 18 of the cylindrical entrance 12 is partly formed with a notched portion 19 to which the tip of the glow plug 20 is loosely fitted without any contact with the inner peripheral wall of the notched portion 19 with the piston 4 at TDC. As seen in Fig. 1, the tip of the glow plug 20 is substantially cylindrical in shape. The tip of the glow plug 20 is arranged obliquely with respect to the central axis of the cylinder 2, so that the tip of the glow plug projects obliquely from the combustion-chamber ceiling wall 21. As shown in Fig. 1, when the piston 4 is approaching to a position close to the top dead center (TDC), the tip of the glow plug 20 is exposed to part of the upper space within the cavity 5 through the notched portion 19. As can be appreciated from the plan view of Fig. 2 and the cross section of Fig. 1, the notched portion 19 is formed as a portion of a slant cylinder inclined with respect to the center axis of the cylinder 2. The notched portion 19 is arranged to face the outer periphery of the tip end of the glow plug 20, while being slightly spaced apart from the outer periphery by a predetermined distance or clearance with the piston 4 at T.D.C., such that the piston 4 never comes into collision-contact with the glow plug 20. That is, the notched portion 19 is provided to avoid interference between the glow plug 20 and the edge of the cylindrical entrance 12 of the cavity 5 with the piston 4 at TDC. According to the present invention, in order to optimize the form and dimensions of the cavity 5 and thus to effectively strengthen squish action, the ratio D_{C}/B of the maximum inside diameter D_{C} of the cavity 5 to the bore B of the cylinder 2 is set within a specified range of 0.5 ≦ D_{C}/B ≦ 0.6. Additionally, in the shown embodiment, the ratio D_{L}/D_{C} of the minimum inside diameter D_{L} of the cylindrical entrance 12 to the maximum inside diameter D_{C} of the cavity 5 is set within a specified range of 0.8 ≦ D_{L}/D_{C} ≦ 0.9. Furthermore, the ratio h/H of the minimum depth h of the central raised portion 14 (corresponding to the distance h between the combustion-chamber ceiling wall 21 and the center of the raised portion 14) to the maximum depth H of the cavity 5 (corresponding to the distance H between the bottom of the cavity 5 and the combustion-chamber ceiling wall 21) is set substantially within a specified range of 0.3 ≦ h/H ≦ 0.4.

With the previously-noted arrangement of the first embodiment, the fuel injected or sprayed out from the injector nozzle 7 is finely atomized, evaporated, and then mixed with the air present in the combustion chamber, when the piston 4 reaches a predetermined position nearer the top dead center (TDC). In more detail, on the compression stroke where the piston 4 moves up and thus the air is compressed, the squish air-flow takes place so that the air, trapped between the piston crown 15 and the combustion-chamber ceiling wall 21 of the cylinder head 6, is squished and pushed out into the cavity 5. In the shown embodiment, the ratio D_{L}/D_{C} of the minimum inside diameter D_{L} of the cylindrical entrance 12 to the maximum inside diameter D_{C} of the cavity 5 is set within the specified range of 0.8 ≦ D_{L}/D_{C} ≦ 0.9, and additionally the ratio D_{C}/B of the maximum inside diameter D_{C} of the cavity 5 to the bore B of the cylinder 2 is set within the specified range of 0.5 ≦ D_{C}/B ≦ 0.6, and thus the surface area of the flattened top surface of the rimmed portion of the piston crown 15 is effectively expanded or increased. Necessarily, the effectively increased surface area of the piston crown 15 increases the squish area. A large amount of air can be pushed into the cavity 5 from the increased squish area. This results in more effective squish action with strong squish gas-flow entering into the cavity 5. Thus, the fuel spray can be adequately mixed with the air present in the combustion chamber. Similarly, on the power stroke (or on the expansion stroke), where the fuel oil injected burns and creates high pressure and thus the piston 4 is pushed down, there occurs counter-squish air-flow flowing out of the cavity 5 into an increasing space between the piston crown 15 and the combustion-chamber ceiling wall 21. In the properly edged entrance 12 of the open combustion chamber type piston of the first embodiment, the radius-of-curvature R of the sharpened lip portion 18 is set at the smallest possible value obtainable by machining, such as approximately 0.2 mm, and thus the cross section of the sharpened lip portion 18 is more sharp in comparison with the conventional squish lip or turbulent-flow lip of the edged entrance. The provision of such a properly sharp-edged or sharpened lip portion 18 ensures the increased flow resistance against the previously-discussed squish air-flow or counter-squish air-flow, and whereby strong turbulence can be imparted to both squish air-flow and counter-squish air-flow. As set out above, the properly sharp-edged lip portion 18 acts to strengthen turbulent flow produced in the combustion chamber. Particularly, the properly sharp-edged lip portion 18 promotes further mixing of the air and the fuel spray through the strong counter-squish action on the expansion stroke, and thereby ensures a more complete utilization of the whole of the air in the combustion chamber. As a result of these, the exhaust smoke density can be reduced and also the engine power output can be effectively enhanced.

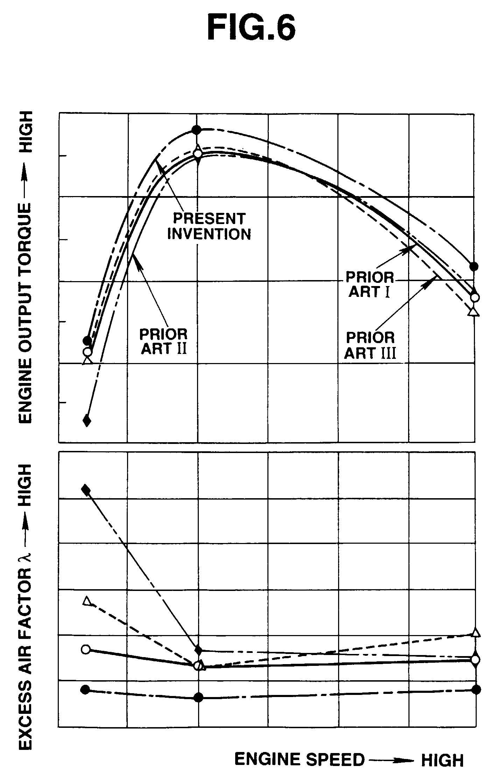

Fig. 5 shows results of comparison of the improved direct injection diesel engine with an open combustion chamber type piston with a properly sharp-edged lip portion 18 having a radius-of-curvature R of approximately 0.2 mm and the conventional direct injection diesel engine with an open combustion chamber type piston with a rounded lip portion having a relatively great radius-of-curvature R of approximately 1.5 mm. It will be seen from the comparison results shown in Fig. 5, that the engine power output is enhanced than with the conventional direct injection diesel engine, within a high speed range in which there may be a comparatively strong air flow in the combustion chamber and also a superior effect on enhanced engine power may be produced by properly sharpening the lip portion 18 of the cylindrical entrance 12. Additionally, the very small rounded portion of the lip portion 18 is a properly sharp-edged portion, but not an excessively sharp-edged portion. The very small rounded portion of the sharp-edged lip portion 18 suppresses thermal load applied to the lip portion 18, exposed to burned gases, from being excessively increased. The notched portion 19 formed at the properly sharp-edged lip portion 18 tends to deform, as the temperature of the lip portion 18 exposed to the burned gases rises. The deformation of the notched portion 19 is effective to suppress concentration of thermal stress acting on the lip portion 18. Also, the notched portion 19 contributes to avoidance of undesired collision-contact between the piston 4 and the glow plug 20 during the reciprocating motion of the piston. This eliminates the necessity for compulsorily placing the glow plug 20 within a comparatively narrow limited space of the center of the combustion chamber. At the same time, the provision of the notched portion 19 for the glow plug 20 enhances design flexibility to the combustion chamber, and thus facilitates the setting of the ratio D_{L}/D_{C} of the minimum inside diameter D_{L} of the cylindrical entrance 12 to the maximum inside diameter D_{C} of the cavity 5 within towards 0.8 ≦ D_{L}/D_{C} ≦ 0.9, and the setting of the ratio D_{C}/B of the maximum inside diameter D_{C} of the cavity 5 to the bore B of the cylinder 2 within towards 0.5 ≦ D_{C}/B ≦ 0.6. With the optimal setting of the ratios D_{L}/D_{C} and/or D_{C}/B, the distribution of the air present in the combustion chamber and the fuel spray, which distribution is determined depending on the form or shape of the cavity 5, can be optimized, and also the gas flow created in the combustion chamber can be strengthened. This allows a more complete utilization of the whole of the air present in the combustion chamber. The central raised portion 14 raised from the bottom of the cavity 5, satisfactorily assures the maximum depth H of the cavity 5. Additionally, the previously-noted setting of the ratio h/H of the minimum depth h of the central raised portion to the maximum depth H of the cavity 5 within a specified range of 0.3 ≦ h/H ≦ 0.4 is effective to strengthen gas flow created in the combustion chamber from within a low engine speed range. Therefore, the distribution of the air present in the combustion chamber and the fuel spray, which distribution is determined depending on the form or shape of the cavity 5, can be optimized. This enhances the air utilization factor.

Referring now to Fig. 6, there is shown test results indicating the relationship among the engine output torque, the excess air factor λ, and the engine speed, for the present invention (the first embodiment) where the radius-of-curvature R of the properly sharpened lip portion 18 is approximately 0.2 mm, the ratio D_{C}/B ranges from 0.5 to 0.6, the ratio D_{L}/D_{C} ranges from 0.8 to 0.9, and the ratio h/H ranges from 0.3 to 0.4, the prior art I where the radius-of-curvature R is approximately 1.5 mm, and the ratio D_{C}/B is 0.61, the prior art II where an open combustion chamber type piston is formed with a flat bottom type cavity and also the ratio h/H is approximately 0.88, and the prior art III whose piston shape is somewhat similar to that of the prior art I. As compared with the three prior art I, II, and III, the engine output torque produced by the improved direct injection diesel engine of the present invention is enhanced all over engine revolution speeds ranging from low to high.

Referring to Fig. 7, there is shown another embodiment of the properly sharp-edged or sharpened lip portion 18. Although the lip portion 18 shown in Fig. 3 is formed as a very small rounded portion having a radius-of-curvature R of approximately 0.2 mm, the lip portion 18 shown in Fig. 7 may be formed as a chamfered portion having a chamfer dimension C of approximately 0.2 mm (corresponding to the smallest possible value obtainable by machining). With the very small chamfered portion having a chamfer dimension C of approximately 0.2 mm, thermal load applied to the lip potion 18 can be suppressed from being excessively built up. In the same manner as the first embodiment, the notched portion 19 formed at the properly sharp-edged and chamfered lip portion 18 shown in Fig. 7 tends to shrink, as the temperature of the properly sharpened lip portion 18 exposed to the burned gases rises. The shrinkage of the notched portion 19 is effective to suppress concentration of thermal stress acting on the lip portion. As set out above, it is possible to achieve desired sharpening to the lip portion 18 of the entrance 12 by setting the chamfer dimension C of the lip portion 18 to a predetermined value of approximately 0.2 mm (corresponding to the smallest possible value obtainable by machining). With the properly sharpened lip portion having a chamfer dimension C of approximately 0.2 mm, the gas flow in the combustion chamber can be strengthened. Particularly, the properly sharpened lip portion 18 of Fig. 7 promotes further mixing of the air and the fuel spray through the strong counter-squish action on the expansion stroke, thereby enhancing the air utilization factor and consequently improving the quality of combustion throughout the combustion chamber. As a consequence, the exhaust smoke density can be reduced and also the engine power output can be effectively enhanced.

As will be appreciated from the above, in the direct injection diesel engine according to the invention, the ratio D_{C}/B of the maximum inside diameter D_{C} of the cavity to the cylinder bore B is set to be below 0.6, and thus the diameter of the cavity can be comparatively small-sized. As a result, with the piston at or near the top dead center, a large amount of air can be pushed toward within the cavity from a comparatively wide squish area by virtue of strong squish action, thereby creating strong gas-flow within the cavity. Also, the lip portion of the cylindrical entrance of the cavity is sharpened, and thus the sharpened lip portion is apt to impart turbulence to the squish gas-flow entering into the cavity when the piston reaches a position nearer the top dead center. In the same manner, the sharpened lip portion serves to impart turbulence to the counter-squish gas-flow flowing out of the cavity, when the piston begins to move down from the top dead center. Owing to combined effects of the small-sized cavity (the increased squish area) and the properly sharpened lip portion of the cylindrical entrance of the cavity insures good mixing of the air present in the combustion chamber and the fuel spray injected from the fuel injector nozzle. As a consequence, the air utilization factor can be enhanced, the exhaust smoke density can be effectively reduced, and thus the engine power output can be enhanced. Furthermore, the provision of the notched portion for avoidance of interference between the glow plug and the piston head can contributes to both enhanced design flexibility and suppression in thermal-stress concentration on the properly-sharpened or edged lip portion. Preferably, the ratio D_{C}/B of the maximum inside diameter D_{C} of the cavity to the cylinder bore B is set within a predetermined range of 0.5 ≦ D_{C}/B ≦ 0.6. Owing to such a more preferable setting of the ratio D_{C}/B, the distribution of the air in the combustion chamber and the fuel spray injected from the nozzle can be optimized. Due to the synergetic effect of the ratio D_{C}/B properly set within 0.5 ≦ D_{C}/B ≦ 0.6 and the properly sharpened lip portion of the entrance, gas flow created in the combustion chamber can be strengthened, thus more effectively enhancing the air utilization factor and thus reducing the exhaust smoke density and enhancing engine power output. More preferably, the ratio D_{L}/D_{C} of the minimum inside diameter D_{L} of the entrance to the maximum inside diameter D_{C} of the cavity is within a predetermined range of 0.8 ≦ D_{L}/D_{C} ≦ 0.9. Thus, the distribution of the air present in the combustion chamber and the fuel spray, which distribution is determined depending on the form of the cavity, can be optimized. Additionally, the properly-sharpened lip portion produces a superior effect in strengthening the gas flow created in the combustion chamber. Due to these effects, the air utilization factor can be enhanced, thus reducing the smoke density, and enhancing engine power output. Moreover, in the previously-discussed embodiments, the ratio h/H of the minimum depth h of the central raised portion of the cavity to the maximum depth H of the cavity is set substantially within a predetermined range of 0.3 ≦ h/H ≦ 0.4. As discussed above, the distribution of the air present in the combustion chamber and the fuel spray, which distribution is determined depending on the form of the cavity, can be optimized. In cooperation with the properly-sharpened lip portion, the air utilization factor and the engine power output can be enhanced, while reducing the exhaust smoke density. In the case that the lip portion of the properly-edged entrance of the cavity is formed as a rounded portion having a radius-of-curvature R corresponding to the smallest possible value (such as substantially 0.2 mm) obtainable by machining, it is possible to enhance thermal resistance against thermal load applied to the edge of the lip portion, while ensuring a superior effect in producing turbulent flow of air entering into the cavity and air flowing out of the cavity. Alternatively, in the case that the lip portion of the properly-edged entrance of the cavity is formed as a chamfered portion having a chamfer dimension C corresponding to the smallest possible value (such as substantially 0.2 mm) obtainable by machining, in the same manner as the lip portion having the proper radius-of-curvature R of substantially 0.2 mm, it is possible to enhance thermal resistance against thermal load applied to the edge of the lip portion, while ensuring a superior effect in producing turbulent flow of air entering into the cavity and air flowing out of the cavity.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

## Claims

1. A direct injection diesel engine comprising:
a cylinder block (1) having a cylinder (2);
a piston (4) movable through a stroke in the cylinder (2) and having a cavity (5) in a piston crown (15);
a cylinder head (6) on said cylinder block (1) and having a combustion-chamber ceiling wall (21), the ceiling wall (21) cooperating with the piston crown (15) and the cavity (5) to define a combustion chamber; and
a fuel injector nozzle (7) attached to the combustion-chamber ceiling wall (21) for injecting fuel toward the cavity (5),
characterized in that a ratio (D_{C}/B) of the maximum inside diameter (D_{C}) of the cavity (5) to the bore (B) of the cylinder (2) is set to be below 0.6, and that the border between the cavity (5) and the piston crown (15) is formed as a sharpened lip portion (18) in cross section.

2. The direct injection diesel engine as claimed in claim 1, which further comprises a glow plug (20) fitted to the combustion-chamber ceiling wall (21) for pre-heating air present in the combustion chamber, and characterized in that an entrance (12) of the cavity (15) has a notched portion (19) partly formed at the sharpened lip portion (18) to avoid interference between said glow plug (20) and the edge of the entrance (12).

3. The direct injection diesel engine as claimed in claims 1 or 2, characterized in that the ratio D_{C}/B of the maximum inside diameter D_{C} of the cavity (5) to the bore B of the cylinder (2) is set within a predetermined range of 0.5 ≦ D_{C}/B ≦ 0.6.

4. The direct injection diesel engine as claimed in any one of preceding claims, characterized in that the cavity (5) comprises at least a cylindrical entrance (12) opening along the inner periphery of a rimmed portion of the piston crown (15), and a reentrant portion (13) further recessed from the cylindrical entrance (12), and that a ratio D_{L}/D_{C} of the minimum inside diameter D_{L} of the cylindrical entrance (12) to the maximum inside diameter D_{C} of the cavity (5) is set within a predetermined range of 0.8 ≦ D_{L}/D_{C} ≦ 0.9.

5. The direct injection diesel engine as claimed in any one of preceding claims, characterized in that the cavity (5) comprises a cylindrical entrance (12) opening along the inner periphery of a rimmed portion of the piston crown (15), a reentrant portion (13) further recessed from the cylindrical entrance (12), and a central raised portion (14) raised from the bottom of the reentrant portion (13), and that a ratio h/H of the minimum depth h of the central raised portion (14) to the maximum depth H of the cavity (5) is set substantially within a predetermined range of 0.3 ≦ h/H ≦ 0.4.

6. The direct injection diesel engine as claimed in any one of preceding claims, characterized in that the cross section of the sharpened lip portion (18) is formed as a rounded portion having a radius-of-curvature of substantially 0.2 mm.

7. The direct injection diesel engine as claimed in any one of preceding claims, characterized in that the cross section of the sharpened lip portion (18) is formed as a chamfered portion having a chamfer dimension of substantially 0.2 mm.
